# EUROPÄISCHE PATENTANMELDUNG

(11) **EP 1 153 771 A2**
(43) Veröffentlichungstag der Anmeldung: **14.11.2001**
(21) Anmeldenummer: 01110722.4
(22) Anmeldetag: 03.05.2001
(51) Int. Cl.: B60G 3/20, B60G 7/02

(54) **Hinterradaufhängung für Kraftfahrzeuge**

(30) Priorität: 13.05.2000 DE 10023645
(71) Anmelder: Bayerische Motoren Werke Aktiengesellschaft, 80809 München (DE)
(72) Erfinder: Nanos, Sis, 81541 München (DE); Heggelmann, Helmut, 86504 Merching (DE); Tempel, Andreas, 85375 Neufahrn (DE); Keck, Albrecht, 85764 Oberschleissheim (DE)

(57) **Zusammenfassung**

Die Erfindung betrifft eine Hinterradaufhängung für Kraftfahrzeuge, insbesondere Personenkraftwagen, mit einem Längslenker (4) sowie zumindest zwei Querlenkern (5) je Radträger (3), welche an einem zusätzlich ein Hinterachsgetriebe (2) tragenden Hinterachsträger angelenkt sind, an dem der Fahrzeug-Aufbau elastisch angebunden ist. Erfindungsgemäß besteht der Hinterachsträger aus zwei separaten Trägereinheiten (7), von denen eine dem linken Radträger und die andere dem rechten Radträger zugeordnet ist und zwischen sowie an denen das Hinterachsgetriebe aufgehängt ist. Bevorzugt sind die zueinander spiegelbildlich gestalteten Trägereinheiten annähernd dreieckförmig ausgebildet und jeweils über drei Lagerstellen (8) am Fahrzeug-Aufbau angebunden. Das Hinterachsgetriebe kann an der linken und der rechten Trägereinheit jeweils über zwei im wesentlichen quer zur Fahrzeug-Längsachse ausgerichtete Streben (9) angebunden sein.

## Beschreibung

Die Erfindung betrifft eine Hinterradaufhängung für Kraftfahrzeuge, insbesondere Personenkraftwagen, mit einem Längslenker sowie zumindest zwei Querlenkern je Radträger, welche an einem zusätzlich ein Hinterachsgetriebe tragenden Hinterachsträger angelenkt sind, an dem der Fahrzeug-Aufbau elastisch angebunden ist. Zum technischen Umfeld wird auf die EP 0 193 090 B1 verwiesen.

Eine Hinterradaufhängung nach dem Oberbegriff des Anspruchs 1 hat sich grundsätzlich bewährt, insbesondere da über die sich im wesentlichen quer zur Fahrzeug-Längsachse ausgerichteten sog. Querlenker sowie den sich im wesentlichen in Fahrzeug-Längsrichtung erstreckenden Längslenker für die beiden Radträger hinsichtlich ihrer Aufhängung günstige Fahrdynamik-Verhältnisse erzielt werden können. Indem ein Hinterachsträger vorgesehen ist, an dem zumindest die Querlenker angelenkt sind, ist eine vorteilhafte Schwingungs- und Körperschall-Entkopplung gegeben. Vorgesehen ist weiterhin ein Hinterachsgetriebe, d.h. es handelt sich um eine angetriebene Hinterachse bzw. angetriebene Räder, wobei ein erforderliches Differential oder Hinterachsgetriebe vorteilhafterweise auch vom Hinterachsträger getragen wird.

Allerdings kann über dieses bzw. ausgehend von diesem Hinterachsgetriebe die Akustik im oder am Fahrzeug-Aufbau in ungünstiger Weise beeinflußt werden, d.h. Körperschall aus dem Hinterachsgetriebe oder aus dem sich daran anschließenden Antriebsstrang des Kraftfahrzeuges kann über den Hinterachsträger in den Fahrzeug-Aufbau eingeleitet werden. Eine Abhilfemaßnahme für diese geschilderte Problematik aufzuzeigen, ist Aufgabe der vorliegenden Erfindung.

Die Lösung dieser Aufgabe ist dadurch gekennzeichnet, daß der Hinterachsträger aus zwei separaten Trägereinheiten besteht, von denen eine dem linken Radträger und die andere dem rechten Radträger zugeordnet ist und zwischen sowie an denen das Hinterachsgetriebe aufgehängt ist. Vorteilhafte Aus- und Weiterbildungen sind Inhalt der Unteransprüche.

Erfindungsgemäß wird der im bekannten Stand der Technik einen einzigen, in sich geschlossenen Rahmen bildende Hinterachsträger, der im bekannten Stand der Technik über vier teil-elastische Abstützpunkte mit dem Fahrzeug-Aufbau bzw. mit dem Unterboden der Fzg.-Karosserie verbunden ist, in zwei eigenständige Trägereinheiten unterteilt. Jede Trägereinheit ist für sich eigenständig am Fahrzeug-Aufbau befestigt und ist mit der anderen Trägereinheit praktisch nur über das an diesen bevorzugt über links und rechts jeweils zwei im wesentlichen quer zur Fzg.-Längsachse ausgerichtete Streben angebundene Hinterachsgetriebe verbunden. Dies erlaubt eine günstige Schwingungs-Entkopplung. Vorteilhafterweise ergibt sich hiermit eine Einzelradaufhängung, da die Kinematik bspw. des linken Radträgers nicht mehr über das kinematische Verhalten des rechten Radträgers beeinflußt werden kann.

Im folgenden wird die Erfindung anhand eines bevorzugten Ausführungsbeispieles weiter erläutert, von welchem die einzige **Figur** eine stark vereinfachte Aufsicht zeigt. Dabei ist mit der Bezugsziffer 1 die Fahrzeug-Längsachse eines Personenkraftwagens bezeichnet, dessen Hinterachse angetrieben ist, wofür ein Hinterachsgetriebe 2 (mit integriertem Differential) vorgesehen ist. Dargestellt sind die beiden symmetrisch zur Fzg.- Längsachse 1 angeordneten Radträger 3, die selbstverständlich jeweils mit dem zugeordneten Ausgang des Hinterachsgetriebe 2 über eine nicht dargestellte Antriebswelle verbunden sind.

Dargestellt (und dabei auf das wesentliche beschränkt) ist ferner die Hinterrad-Aufhängung dieser Radträger 3. Neben einem Längslenker 4, der im wesentlichen parallel zur Fzg.-Längsachse 1 ausgerichtet ist, sind je Radträger 3 zumindest zwei sich im wesentlichen quer zur Fzg.-Längsachse 1 erstreckende Querlenker 5 vorgesehen, von denen der Einfachheit halber lediglich einer je Radträger 3 dargestellt ist. Auf diesem dargestellten Querlenker 5 stützt sich ferner - wie ersichtlich - eine sich im wesentlichen in Vertikalrichtung und somit senkrecht zur Zeichenebene erstreckende Feder-Dämpfereinheit 6 ab, auf deren gegenüberliegendem Ende sich der nicht dargestellte Fzg.-Aufbau abstützt.

Die beiden an jedem Radträger 3 gelenkig befestigten Querlenker 5 sind mit ihrem gegenüberliegenden Ende ebenfalls gelenkig an einer jedem Radträger 3 zugeordneten Trägereinheit 7 befestigt. Die demzufolge beiden bezüglich der Längsachse 1 zueinander spiegelbildlich gestalteten Trägereinheiten 7 sind wie ersichtlich annähernd dreieckförmig ausgebildet, d.h. sie bestehen hier aus jeweils drei geeignet - und hier annähernd in Form des Buchstabens "A" - zusammengesetzten Profilstreben oder dgl.

Jede Trägereinheit 7 ist über drei Lagerstellen 8, die sich bevorzugt nahe der Eckpunkte der im wesentlichen dreickförmigen Trägereinheit 7 befinden, statisch bestimmt am Fzg.-Aufbau angebunden, und zwar bevorzugt über Gummilager oder dgl. Die beiden Trägereinheiten 7 tragen zwischen sich zusätzlich noch das Hinterachsgetriebe 2, und zwar jeweils über zwei im wesentlichen quer zur Fzg.-Längsachse 1 ausgerichtete Streben 9a, 9b. Wie ersichtlich ist das Hinterachsgetriebe 2 hiermit über eine relativ breite Basis an die beiden eigenständigen Trägereinheiten 7, die in ihrer Gesamtheit quasi als Hinterachsträger bezeichnet werden können, angekoppelt, wobei diese Ankoppelung über die Streben 9a, 9b bzw. über entsprechende Gelenke ausreichend elastisch ausgebildet sein kann. Insbesondere ist hierdurch das Hinterachsgetriebe 2 und somit auch der mit diesem verbundene Fzg.-Antriebsstrang zusätzlich und somit besonders wirkungsvoll vom Fzg.- Aufbau entkoppelt.

Ein verbessertes bzw. optimales Akustikverhalten ist hiervon die Folge, da eine wirkungsvolle Isolation zwischen dem Antriebsstrang und dem Fzg.- Aufbau vorliegt. Durch die Teilung eines bislang relativ großen Hinterachsträgers in nunmehr zwei kleinere Trägereinheiten 7 wird vorteilhafterweise die Eigenresonanz der betreffenden Bauteile erhöht. Darüber hinaus ist auch die Fahrdynamik einer erfindungsgemäßen Hinterradaufhängung weiter optimier- und abstimmbar, da hiermit quasi eine Einzelradaufhängung bei weiterhin vorteilhafter, relativ einfacher Bauweise erzielt wird. Lastwechselreaktionen und gegenseitige Beeinflussung des linken und des rechten Radträgers 3 werden somit bestmöglich reduziert, wobei noch darauf hingewiesen sei, daß durchaus eine Vielzahl von Details insbesondere konstruktiver Art abweichend vom gezeigten Ausführungsbeispiel gestaltet sein kann, ohne den Inhalt der Patentansprüche zu verlassen.

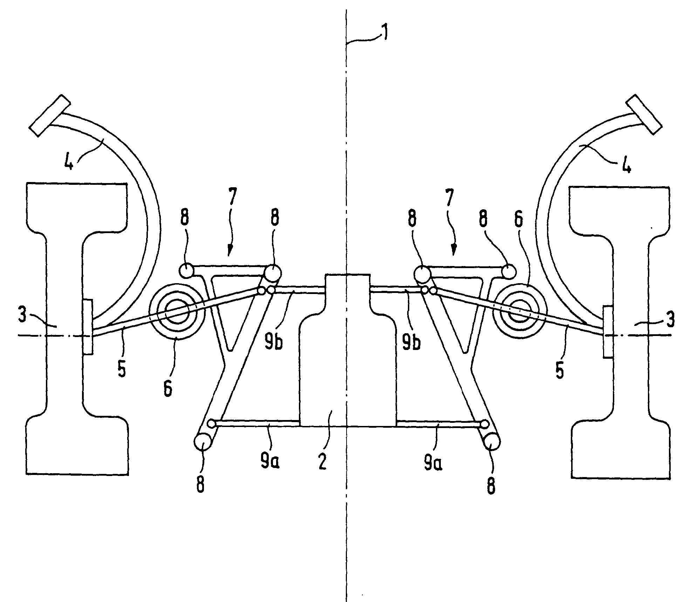

## Patentansprüche

1. Hinterradaufhängung für Kraftfahrzeuge, insbesondere Personenkraftwagen, mit einem Längslenker (4) sowie zumindest zwei Querlenkern (5) je Radträger (3), welche an einem zusätzlich ein Hinterachsgetriebe (2) tragenden Hinterachsträger angelenkt sind, an dem der Fahrzeug-Aufbau elastisch angebunden ist,
**dadurch gekennzeichnet, daß** der Hinterachsträger aus zwei separaten Trägereinheiten (7) besteht, von denen eine dem linken Radträger (3) und die andere dem rechten Radträger (3) zugeordnet ist und zwischen sowie an denen das Hinterachsgetriebe (2) aufgehängt ist.

2. Hinterradaufhängung nach Anspruch 1,
**dadurch gekennzeichnet, daß** die zueinander spiegelbildlich gestalteten Trägereinheiten (7) annähernd dreieckförmig ausgebildet sind.

3. Hinterradaufhängung nach Anspruch 1 oder 2,
**dadurch gekennzeichnet, daß** jede Trägereinheiten (7) über drei Lagerstellen (8) am Fahrzeug-Aufbau angebunden ist.

4. Hinterradaufhängung nach einem der vorangegangenen Ansprüche,
**dadurch gekennzeichnet, daß** das Hinterachsgetriebe (2) an der linken und der rechten Trägereinheit (7) jeweils über zwei im wesentlichen quer zur Fahrzeug-Längsachse (1) ausgerichtete Streben (9) angebunden ist.
